# FASCICULE DE BREVET EUROPEEN

(11) **EP 1 902 907 B1**
(45) Date de publication et mention de la délivrance du brevet: **15.12.2010**
(21) Numéro de dépôt: 07116222.6
(22) Date de dépôt: 12.09.2007
(51) Int. Cl.: B60R 19/34, B60R 19/22

(54) **Dispositif d'absorption d'énergie pour poutre pare-chocs de véhicule automobile**
Energieabsorbierende Vorrichtung für eine Stossfängerstange eines Kraftfahrzeugs
Energy absorbing device for a bumper beam of a vehicle

(30) Priorité: 20.09.2006 FR 0608241
(43) Date de publication de la demande: 26.03.2008
(73) Titulaire: VALEO SYSTEMES THERMIQUES, 78321 Le Mesnil St Denis Cedex (FR)
(72) Inventeur: Guinehut, Sébastien, 92130 Issy-les-Moulineaux (FR); Fonseca Barbosa, Marcelo, 78280 Guyancourt (FR); Salin, Laurent, 75015 Paris (FR)

(56) Documents cités:
- DE-A1- 3 836 724
- FR-A- 2 876 645
- FR-A- 2 887 210
- FR-A1- 2 842 152
- US-A- 2 997 325

## Description

L'invention se rapporte à un dispositif absorbeur d'énergie destiné à être placé entre l'extrémité d'un longeron de véhicule automobile et une poutre pare-chocs.

Elle concerne plus particulièrement un dispositif d'absorption d'énergie pour poutre pare-chocs de véhicule automobile, comprenant une enveloppe dans laquelle est logée une mousse métallique ayant des propriétés d'absorption d'énergie.

Les véhicules actuels reçoivent une face avant susceptible d'intégrer divers équipements du véhicule tels que les projecteurs, les clignotants, l'avertisseur sonore, etc. La face avant constitue un élément modulaire prêt à être monté sur le véhicule. Son montage se fait par raccordement à des éléments de structure latéraux du véhicule, tels que les longerons, puis par la mise en place d'un pare-chocs rapporté sur le module.

Des boîtiers absorbeurs d'énergie sont disposés entre chacun des longerons et la poutre pare-chocs. Ces boîtiers absorbeurs doivent répondre à des normes strictes afin d'être capables d'absorber l'énergie d'un choc normalisé connu sous le nom de choc Danner correspondant à l'impact du véhicule contre un obstacle fixe à une vitesse de 16 km/heure. L'absorption de l'énergie doit être obtenue sans que le pic d'effort enregistré dans le boîtier dépasse une limite maximale, par exemple 120 kN.

D'autre part, le coût des assurances automobiles est calculé en fonction du coût des réparations à apporter aux véhicules après un choc frontal à 16 km/h. Plus le coût des réparations est important, plus le montant de la prime d'assurance sera élevé. Il est donc important, afin de limiter le montant de cette prime pour un véhicule donné, que ce dernier soit capable de subir un tel choc frontal sans enregistrer de dommages importants.

De tels dispositifs d'absorption d'énergie sont généralement réalisés sous la forme d'un profilé généralement de section rectangulaire garni d'une mousse métallique ayant des propriétés d'absorption d'énergie. Typiquement, grâce à l'interaction de la mousse et de la déformation du profilé, l'énergie absorbée par un tel dispositif est maximisée dans un volume réduit.

Un dispositif selon le préambule de la revendication 1 est décrit dans le brevet DE 38 36 724.

De tels dispositifs sont intéressants car ils permettent d'absorber une partie importante de l'énergie du choc sous un effort constant. Cependant, lorsque la mousse métallique atteint sa déformation maximale, c'est à dire lorsqu'elle se trouve dans un état compacté, celle-ci ne participe plus de manière aussi efficace à l'absorption du choc. Ainsi, l'effort sous lequel a lieu cette absorption s'élève de manière importante et n'est plus acceptable en regard des besoins actuels.

L'invention vise à améliorer la situation.

A cet effet, l'invention propose un dispositif d'absorption d'énergie selon la revendication 1.

Un tel dispositif est particulièrement avantageux en ce qu'il permet de prolonger l'absorption d'énergie sous un effort constant.

Dans un premier mode de réalisation, la platine de fixation présente un évidement de dimension choisie en regard de l'enveloppe, l'élément déformable peut être une platine propre à être reliée à la platine de fixation, et l'élément déformable peut présenter une découpe de forme choisie en regard de l'évidement de la platine de fixation.

Dans un deuxième mode de réalisation, l'élément déformable est formé par des bords repliés de l'enveloppe et peut présenter une découpe de forme choisie en regard de l'évidement de la platine de fixation.

Dans un troisième mode de réalisation, l'élément déformable est réalisé par une zone de la platine de fixation qui présente une épaisseur réduite, et/ou l'élément déformable peut être réalisé par une zone de la platine de fixation qui présente une découpe de forme choisie.

Dans l'ensemble de ces modes de réalisation, l'élément déformable peut présenter des renforts afin d'augmenter sa rigidité et les dispositifs peuvent être réalisés en matériaux métalliques tels que de l'acier, de l'aluminium, un alliage d'aluminium ou encore en nuance acier.

D'autres caractéristiques et avantages de l'invention apparaîtront mieux à la lecture de la description, donnée à titre illustratif et non limitatif, d'exemples tirés des dessins sur lesquels :
- la figure 1 montre une vue en perspective d'un premier mode de réalisation d'un dispositif selon l'invention, dans lequel une partie est représentée en écorchée ;
- les figures 2A et 2B représentent une vue schématique en coupe du dispositif de la figure 1, montée sur le longeron d'un véhicule automobile, avant (figure 2A) et après (figure 2B) un choc ;
- les figures 3A et 3B montrent une vue schématique en coupe de deux variantes d'un deuxième mode de réalisation de l'invention;
- les figures 4A et 4B montrent une vue en perspective schématique de deux variantes d'un troisième mode de réalisation de l'invention ; et
- les figures 5A et 5B montrent une vue en perspective et une vue en coupe d'une troisième variante et d'une quatrième variante du troisième mode de réalisation de l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

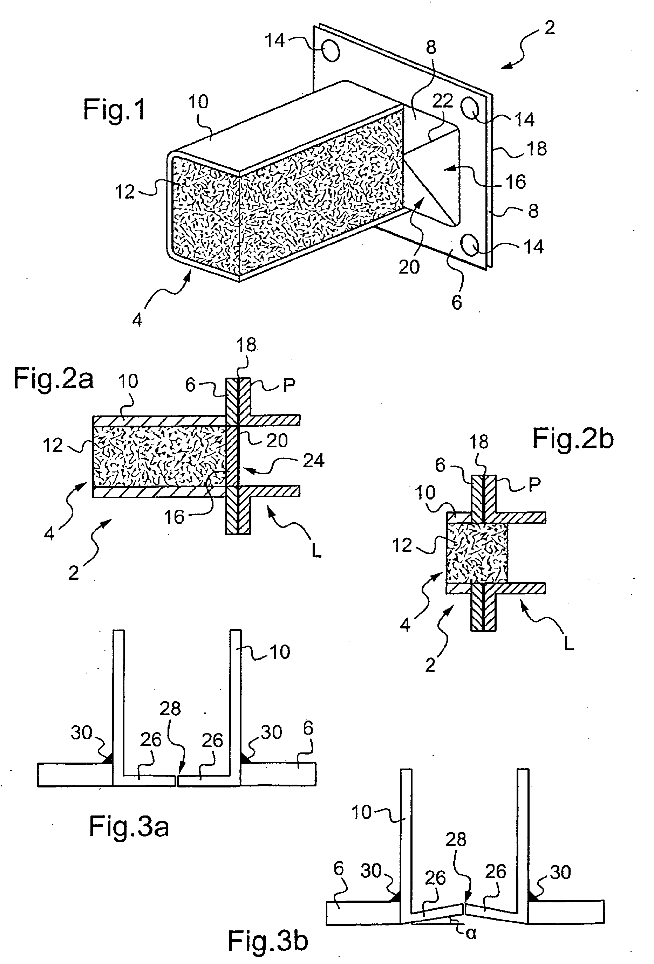

La figure 1 montre un premier mode de réalisation d'un dispositif d'absorption d'énergie 2 selon l'invention. Le dispositif 2 comporte un élément d'absorption d'énergie 4, monté sur une platine de fixation 6, ainsi qu'un élément déformable 8.

L'élément d'absorption 4 est monté de manière classique sur la platine de fixation 6, c'est à dire qu'il peut être soudé, collé, ou venu de moulage avec cette dernière.

L'élément 4 comprend une enveloppe 10 remplie d'une mousse d'aluminium 12 permettant d'absorber l'énergie d'un choc. L'élément 4 est un profilé qui présente une section transversale de forme générale sensiblement rectangulaire, et dont l'axe longitudinal est sensiblement perpendiculaire à la platine de fixation 6.

La platine de fixation 6 est de forme générale sensiblement rectangulaire, et présente des trous 14 pour la liaison du dispositif 2 à la platine de fixation d'un longeron de véhicule automobile.

La platine de fixation 6 présente également un évidement 16 réalisé sensiblement dans sa partie centrale. Dans l'exemple décrit ici, l'évidement 16 présente des dimensions homologues de celles de la section de l'enveloppe 10. Il serait cependant possible de réduire la taille de cet évidement ou de modifier sa forme, selon les besoins de l'application.

Dans ce mode de réalisation, l'élément déformable 8 est réalisé sous la forme d'une platine 18 qui présente des dimensions similaires à celles de la platine 6 et qui est disposée contre celle-ci.

La platine 18 comporte également des trous prévus en regard des trous 14 de la platine 16, non représentés dans un souci de clarté, et qui permettent la liaison du dispositif 2 à la platine de fixation d'un longeron de véhicule automobile.

Du fait de l'évidement 16, la platine 18 présente une zone 20 sensiblement rectangulaire comme l'évidement 16. La zone 20 est ainsi disposée directement en regard de l'extrémité de l'élément 4.

La zone 20 présente une découpe 22 en forme de X, dont les branches sont formées par ses diagonales. La découpe 22 permet une déformation sous un niveau d'effort choisi, comme il apparaîtra par la suite. D'autres formes de découpe sont possibles selon les besoins de l'application.

L'enveloppe 10, la platine 6 et la platine 18 sont réalisées en matériaux métalliques notamment en alliage d'aluminium ou en acier.

La figure 2A montre le dispositif 2 de la figure 1 monté sur un longeron L d'un véhicule automobile, avant un choc.

Dans cette configuration dite de repos, le dispositif 2 est disposé contre une platine P du longeron L, de sorte que les trous 14 de la platine 6 soient disposés en regard de trous homologues de la platine 18 et de la platine P, et traversés par des moyens de fixation non représentés dans un souci de clarté.

La platine P est évidée en son centre au niveau d'une zone 24 de forme et de dimensions homologues de celles de l'évidement 16 et de la zone 20.

Lorsqu'un choc a lieu, l'élément 4 se comprime contre la platine P, en absorbant ainsi de l'énergie sous un niveau d'effort constant grâce au comportement de la mousse 12. En même temps que la mousse 12 se compacte, la zone 20 de la platine 18 se déforme en commençant par s'ouvrir pour permettre une évacuation progressive à travers l'élément déformable 8. Cette évacuation progressive pourra être plus ou moins régulière en fonction de l'effort et/ou de la quantité d'énergie libérée par le choc,

Cette absorption est réalisée sous un niveau d'effort presque constant, et proche du niveau d'effort précédent le compactage, grâce au dimensionnement de l'élément 8 (choix de sa matière et de la découpe 22).

Sous l'effet de cette déformation, la mousse 12 est évacuée partiellement au travers de la platine 18 et de l'évidement 24 de la platine P, à l'intérieur du longeron L.

La déformation de l'élément 8 permet donc une évacuation de la mousse 12 selon une direction privilégiée, qui est dans l'exemple ici décrit celle du choc absorbé.

Une fois le choc absorbé, le dispositif 2 est disposé comme représenté sur la figure 2B.

La mousse métallique 12 est compactée à son maximum et pénètre au moins partiellement à l'intérieur du longeron L, tandis que l'enveloppe 10 est compactée jusqu'à une épaisseur résiduelle correspondant à la portion de mousse 12 ne pénétrant pas le longeron L. Les bords de la zone 20 définis par les découpes 22 sont repliés le long des parois internes du longeron L.

On a représenté sur la figure 3 une première variante d'un deuxième mode de réalisation du dispositif de la figure 1, dans laquelle l'élément déformable 8 n'est pas constitué par une platine, mais par des bords repliés 26 de l'enveloppe 10. Une découpe 28 de forme choisie est réalisée entre les bords 26 afin de dimensionner l'absorption de l'élément 8.

L'enveloppe 10 et la platine 6 sont reliées par des cordons de soudure 30. On pourra avantageusement ajouter des renforts au niveau de l'élément déformable 8 afin d'augmenter sa rigidité pour mieux contrôler sa déformation et ainsi aider au maintien d'un niveau d'effort constant.

Dans une deuxième variante représentée sur la figure 3B, les bords 26 sont redressés selon un angle α choisi par rapport au plan de la platine de fixation 6 afin de mieux maîtriser la déformation de l'élément déformable 8.

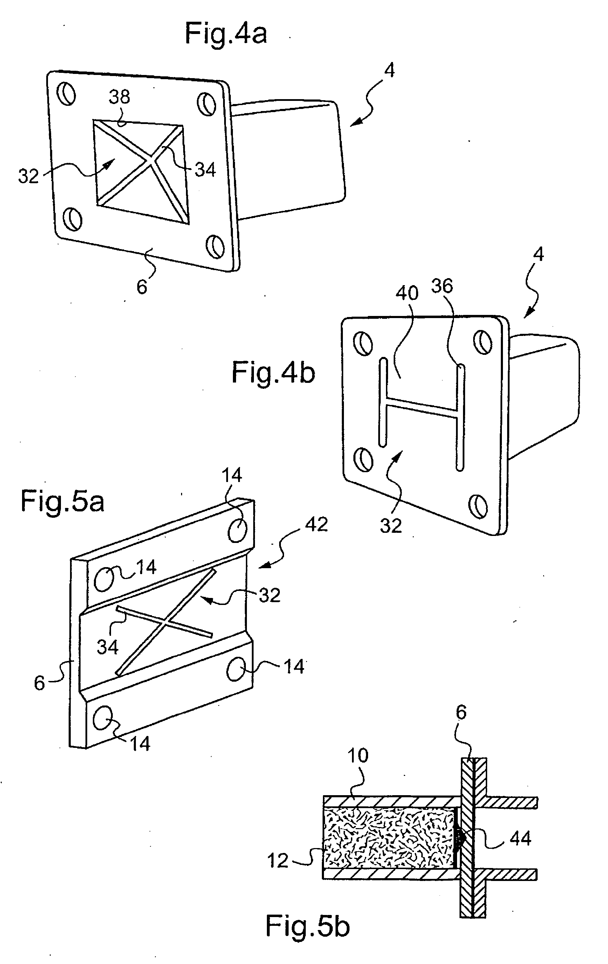

On a représenté sur la figure 4A une première variante d'un troisième mode de réalisation de l'invention, dans lequel l'élément déformable 8 est réalisé par une zone 32 de la platine 6.

La zone 32 présente des découpes 34 en forme de X dont les branches sont formées par ses diagonales. Dans une deuxième variante représentée sur la figure 4B, la zone 32 présente une découpe 36 en forme de H.

Les bords indépendants 38 et 40, définis respectivement par les découpes 34 et 36, peuvent former un angle choisi avec la platine 6, ou être contenus dans celui-ci,

Comme représenté sur la figure 5A, la platine 6 peut comporter en variante une zone 42 de moindre épaisseur, dans laquelle est prévue la zone 32, afin de faciliter la déformation programmée.

Dans une variante représentée sur la figure 5b, toujours afin d'assurer une déformation conforme aux prévisions, un poinçon 44 peut être disposé à l'extrémité de la mousse 12 faisant face à la platine 6 et à la zone 32 dans la position de repos, de manière à assurer un bon déchirement de l'élément déformable 8, sans que la zone 32 présente une épaisseur réduite ou une découpe particulière.

## Revendications

1. Dispositif d'absorption d'énergie pour poutre pare-chocs de véhicule automobile, comprenant une enveloppe (10) dans laquelle est logée une mousse métallique (12) ayant des propriétés d'absorption d'énergie et une platine (6) pour fixer le dispositif (2) sur une partie du véhicule automobile, **caractérisé en ce qu'**il comporte un élément déformable (8) comportant une zone (20) configurée de manière à ce que, en même temps que la mousse métallique (12) se compacte, ladite zone (20) dudit élément déformable (8) se déforme en commençant par s'ouvrir pour permettre une évacuation progressive de ladite mousse métallique (12) au travers dudit élément déformable (8).

2. Dispositif selon la revendication 1, **caractérisé en ce que** la platine de fixation (6) présente un évidement (16) de dimensions choisies en regard de l'enveloppe (10).

3. Dispositif selon la revendication 2, **caractérisé en ce que** ledit élément déformable (8) est une platine (18) propre à être reliée à la platine de fixation (6).

4. Dispositif selon la revendication 3, **caractérisé en ce que** ledit élément déformable (8) présente une découpe (22) de forme choisie en regard de l'évidement (16) de la platine de fixation (6).

5. Dispositif selon la revendication 2, **caractérisé en ce que** ledit élément déformable (8) est formé par des bords repliés (26) de l'enveloppe (10).

6. Dispositif selon la revendication 5, **caractérisé en ce que** ledit élément déformable (8) présente une découpe (28) de forme choisie.

7. Dispositif selon la revendication 1, **caractérisé en ce que** ledit élément déformable (8) est réalisé par une zone (42) de la platine de fixation (6) qui présente une épaisseur réduite.

8. Dispositif selon la revendication 1 ou 7, **caractérisé en ce que** ledit élément déformable (8) est réalisé par une zone (32) de la platine de fixation qui présente une découpe (36, 38) de forme choisie.

9. Dispositif selon l'une des revendications précédentes, **caractérisé en ce que** l'élément déformable (8) présente des renforts pour augmenter sa rigidité.

10. Dispositif selon l'une des revendications précédentes, **caractérisé en ce qu'**il est réalisé en matériaux métalliques notamment en alliage d'aluminium ou en acier.

## Claims

1. Energy absorbing device for a motor vehicle bumper beam, comprising a jacket (10) containing a metallic foam (12) that has energy absorbing properties and a plate (6) for fixing the device (2) to a part of the motor vehicle, **characterized in that** it comprises a deformable element (8) comprising a region (20) configured so that, when the metallic foam (12) is compacted, said region (20) of said deformable element (8) is deformed firstly by opening it to allow for a gradual evacuation of said metallic foam (12) through said deformable element (8).

2. Device according to Claim 1, **characterized in that** the fixing plate (6) has a void (16) of chosen dimensions facing the jacket (10).

3. Device according to Claim 2, **characterized in that** said deformable element (8) is a plate (18) designed to be linked to the fixing plate (6).

4. Device according to Claim 3, **characterized in that** said deformable element (8) has a cutout (22) of chosen shape facing the void (16) in the fixing plate (6).

5. Device according to Claim 2, **characterized in that** said deformable element (8) is formed by folded edges (26) of the jacket (10).

6. Device according to Claim 5, **characterized in that** said deformable element (8) has a cutout (28) of chosen shape.

7. Device according to Claim 1, **characterized in that** said deformable element (8) is produced by an area (42) of the fixing plate (6) which has a reduced thickness.

8. Device according to Claim 1 or 7, **characterized in that** said deformable element (8) is produced by an area (32) of the fixing plate which has a cutout (36, 38) of chosen shape.

9. Device according to one of the preceding claims, **characterized in that** the deformable element (8) has reinforcements to increase its rigidity.

10. Device according to one of the preceding claims, **characterized in that** it is made of metal materials, notably of aluminium alloy or of steel.

## Patentansprüche

1. Energieabsorbierende Vorrichtung für eine Stoßdämpferstange eines Kraftfahrzeugs, die eine Hülle (10), in der ein Energieabsorptionseigenschaften aufweisender Metallschaum (12) untergebracht ist, und eine Platte (6) zur Befestigung der Vorrichtung (2) an einem Teil des Kraftfahrzeugs enthält, **dadurch gekennzeichnet, dass** sie ein verformbares Element (8) mit einem Bereich (20) aufweist, der so konfiguriert ist, dass zur gleichen Zeit, in der der Metallschaum (12) sich verdichtet, der Bereich (20) des verformbaren Elements (8) sich verformt, indem er damit beginnt, sich zu öffnen, um einen progressiven Austritt des Metallschaums (12) durch das verformbare Element (8) hindurch zu ermöglichen.

2. Vorrichtung nach Anspruch 1, **dadurch gekennzeichnet, dass** die Befestigungsplatte (6) eine Aushöhlung (16) mit ausgewählten Abmessungen gegenüber der Hülle (10) hat.

3. Vorrichtung nach Anspruch 2, **dadurch gekennzeichnet, dass** das verformbare Element (8) eine Platte (18) ist, die mit der Befestigungsplatte (6) verbunden werden kann.

4. Vorrichtung nach Anspruch 3, **dadurch gekennzeichnet, dass** das verformbare Element (8) einen Ausschnitt (22) ausgewählter Form gegenüber der Aushöhlung (16) der Befestigungsplatte (6) hat.

5. Vorrichtung nach Anspruch 2, **dadurch gekennzeichnet, dass** das verformbare Element (8) durch umgebogene Ränder (26) der Hülle (10) hergestellt wird.

6. Vorrichtung nach Anspruch 5, **dadurch gekennzeichnet, dass** das verformbare Element (8) einen Ausschnitt (28) ausgewählter Form hat.

7. Vorrichtung nach Anspruch 1, **dadurch gekennzeichnet, dass** das verformbare Element (8) durch einen Bereich (42) der Befestigungsplatte (6) hergestellt wird, der eine verringerte Dicke hat.

8. Vorrichtung nach Anspruch 1 oder 7, **dadurch gekennzeichnet, dass** das verformbare Element (8) durch einen Bereich (32) der Befestigungsplatte hergestellt wird, der einen Ausschnitt (36, 38) ausgewählter Form aufweist.

9. Vorrichtung nach einem der vorhergehenden Ansprüche, **dadurch gekennzeichnet, dass** das verformbare Element (8) Verstärkungen hat, um seine Steifheit zu erhöhen.

10. Vorrichtung nach einem der vorhergehenden Ansprüche, **dadurch gekennzeichnet, dass** sie aus metallischen Werkstoffen hergestellt ist, insbesondere aus Aluminiumlegierung oder aus Stahl.
